Europäisches Patentamt

European Patent Office

Office européen des brevets

(11) Publication number: **0 517 974 A1**

## EUROPEAN PATENT APPLICATION

(21) Application number: 91305334.4

(22) Date of filing: 12.06.91

(51) Int. Cl.5: **B29C 67/18**, A47K 3/02,
//B29K75/00

(43) Date of publication of application:
16.12.92 Bulletin 92/51

(84) Designated Contracting States:
DE FR GB NL

(71) Applicant: Mady, Hosny Henry
Awayed-Alexandria Old Road
Alexandria(EG)

(72) Inventor: Mady, Hosny Henry
Awayed-Alexandria Old Road
Alexandria(EG)

(74) Representative: Parry, Christopher Stephen et
al
PAGE, WHITE & FARRER 54 Doughty Street
London WC1N 2LS(GB)

(54) Process for lining metal or plastic surface to support pre-shaped products and products produced therewith.

(57) A process for lining a pre-shaped metal or acrylic sheet with supporting layers includes the steps of:

(a) forming the body (6) of the product either of metal or acrylic material to take the required shape;

(b) applying high density P.U. mixed with reinforcing medium which could be cast iron or any other reinforcing filler, by injection either in open or closed moulds under pressure or by spray application to form reinforced supporting layer (7); or;

applying an adhesive solvent on the side of the body which should be supported before injecting a high density P.U. mixed with reinforcing medium which could be cast iron or any other reinforcing filler, either in open or closed moulds under pressure or by spray application to form a supporting layer (7);

(c) treating the first supporting layer (7) by an elastomer of non-foaming P.U. by spray application to form a second supporting layer (8) which is further reinforced by adding metallic cast iron granules.

Fig 2

This invention relates to process for lining or coating a pre-shaped plates of tin or plastic material to be supported by poly urethane. In particular, this invention relates to process of producing a fully insulated products which can bear excessive shear such as tubs. The invention relates to new products produced by the said process and in particular new tubs. For puroposes of simplification and easily understanding, the invention will be described in respect of tubs, however, the scale of this invention is not restricted thereof.

Present available tubs are made of several materials including tin, polyester and plastics. Tubs made of tin has a thickness of o.7-1.1 mm i.e such tin tub is made of a very thin layer of tin which is easily corroded. The said thin tin layer is coated with a layer of glaze which does not exceed few microns of thickness. Therefore these tubs are subject to corrosion in addition of being noisy. The glaze layer itself is subject to crack when subjected to shearing foree.

Tubs made of Plastic materials are supported by either polyester or fibre glass. Supporting layer does not usually exceed 3mm as thickness more than 3 mm may lead to cracking of the tub if subjected to shocks or shearing forces. The most important thing in this respect that supporting layer often separated from the pre-shaped plastic material for lack of complete adhesion between supporting layer and pre-shaped surface.

These disadvantages may be overcome by lining of the pre-shaped tin surface with a layer of poly urethane.

This process is very difficult as poly urethane does not adhere to pre-shaped tin surface.

In other words, the main disadvantage in tubs resides in weak supporting and to overcome this problem tubs made of tin should be fully supported to bear shocks without cracking of glaze layer and which are not easily corroded as it is fully insulated.

It should be mentioned that if tubs made of plastic material are supported by poly urethane in mannar provide for a complete adhesion, the tubs produced may bear excessive shearing forces and do not crack by shocks.

The object of this invention is to overcome this problem to produce products made of pre-shaped metal or plastic material coated with a supporting layer of Polyurethane.

We have discovered that we can overcome the above problem by treatment of the said metal or plastic surface with adhesive solvent using one of the following methods.

According to a first aspect of this invention, there is provided a process for lining a pre-shaped metal or acrylic sheet with supporting layers characterised by the steps of:

(a) forming the body of the product either of metal or acrylic material to take the required shape;

(b) applying high density P.U. mixed with reinforcing medium which could be cast iron or any other reinforcing filler, by injection either in open or closed moulds under pressure or by spray application to form reinforced supporting layer;

(c) treating the first supporting layer by an elastomer of non-foaming P.U. by spray application to form a second supporting layer which is further reinforced by adding metallic cast iron granules.

The process may be carried out either in one shot one mould or separate moulds.

According to a second aspect of the invention there is provided a process for lining of pre-shaped metal or acrylic sheet with supporting layer characterised by the steps of:

(a) forming the body of the product either of metal or acrylic material to take the required shape;

(b) applying an adhesive solvent on the side of the body which should be supported before injecting a high density P.U. mixed with reinforcing medium which could be cast iron or any other reinforcing filler, either in open or closed moulds under pressure or by spray application to form a supporting layer;

(c) treating the first supporting layer by a elastomer of non-foaming P.U. by spray application to form a second supporting layer which layer is further reinforced by adding metallic cast iron granules.

Preferably, the density of the P.U. is about 140 Kg/cm$^3$.

Preferably, the pressure of injection is from 40 to 90 P.S.I.

Addition of the said cast iron granules result in a very high solidity and increase cohesiveness bonds of the bath tub all together with mortar medium.

Suitable adhesive solvents which may be used to solvate poly urethane surface and activate the metal or acrylic surface to allow complete cohesiveness includes: Carboxy methyl Cellulose, Carbon Tetra Chloride, Dioxane or methylene Chloride.

The invention will be described, by way of example only, with reference to the following drawings in which:

Fig 1 is a view of a product supported by a process in accordance with the invention.

Fig 2 is a sectional view taken on the line X-X shown in Fig 1.

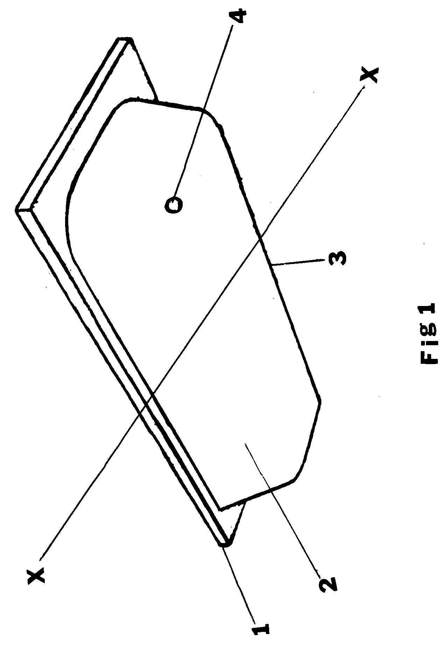

Referring to Fig 1 there is a tub produced in accordance with the invention wherein the outer edge 1 is used to fix the tub, slanting wall 2 extended from the top edge to the bottom of the tub 3. The inner bottom (not shown) may take different shapes e.g. shaped projections to prevent sliding and drainage opening 4.

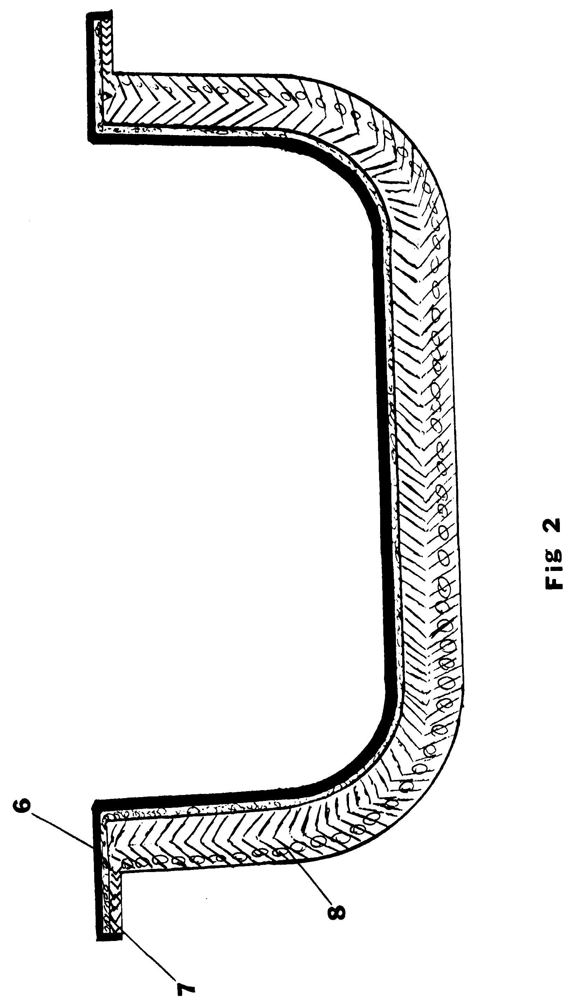

In the preferred embodient of the invention with reference to Fig 2, tubs contains the following layers:-

1- metal or acrylic layer forming the body the tub ( 6 ) which is coated with glaze layer as usual.

2- Supporting layer of high density P.U. reinforced with cast iron granules ( 7 ).

3- Supporting layer of Elastomer non-foaming P.U. also reinforced with cast iron granules (8).

It should be noted that this product may be produced by either processes of the invention. In other words product of Fig 1 may be produced as follows:-

1- Shaping metal or plastic sheet 6 to form the body of the tub shown in Fig.1.

2- Applying an adhesive solvent on the back side of the sheet 6 before injecting supporting layer of high density P.U. either in open or closed mould under pressure or by spray application to form the required supporting layer ( 7 ).

3- Treating the said supporting layer ( 7 ) by Elastomer of non-foaming P.U. using spray application. These layers may be reinforced by adding metallic cast iron ( not shown ) granules which gives the surface a very high solidity mortar medium.

The tub produced in the manner characterized in that it bears excessive shearing forces and shoks without cracking. The said tubs are not subject to corrosion action in addition of being noisless.

Although the invention has been described in respect of specific example, the scope and spirit therof does not restrict to particulars thereof as various changes and modifications may be made, which fall within the general scope of the invention.

**Claims**

1. A process for lining a pre-shaped metal or acrylic sheet with supporting layers characterised by the steps of:

   (a) forming the body of the product either of metal or acrylic material to take the required shape;

   (b) applying high density P.U. mixed with reinforcing medium which could be cast iron or any other reinforcing filler, by injection either in open or closed moulds under pressure or by spray application to form reinforced supporting layer;

   (c) treating the first supporting layer by an elastomer of non-foaming P.U. by spray application to form a second supporting layer which is further reinforced by adding metallic cast iron granules.

2. A process according to claim 1 wherein it is carried out in one shot one mould or separate moulds.

3. A process according to claim 1 wherein the density of the high density P.U. is about 140 Kg/cm$^3$.

4. A process according to claim 1 wherein pressure used is in the range from 40 to 90 PSI.

5. A process for lining of pre-shaped metal or acrylic sheet with supporting layer characterised by the steps of:

   (a) forming the body of the product either of metal or acrylic material to take the required shape;

   (b) applying an adhesive solvent on the side of the body which should be supported before injecting a high density P.U. mixed with reinforcing medium which could be cast iron or any other reinforcing filler, either in open or closed moulds under pressure or by spray application to form a supporting layer;

   (c) treating the first supporting layer by a elastomer of non-foaming P.U. by spray application to form a second supporting layer which layer is further reinforced by adding metallic cast iron granules.

6. A process according to claim 5 wherein the adhesive solvent is selected from carboxy methyl cellulose, dioxane, carbon tetrachloride or methylene chloride.

7. A process according to claim 5 wherein the P.U. used in forming the first supporting layer has a density of about 140 Kg/cm$^3$.

**Fig 1**

EP 0 517 974 A1

Fig 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2 170 751 (ICI)<br>* page 1, line 64 - page 2, line 8 *<br>* page 2, line 39 - line 46 *<br>* page 2, line 56 - line 63 *<br>* page 3, line 15 - line 17 *<br>--- | 1-7 | B29C67/18<br>A47K3/02<br>//B29K75:00 |
| X | GB-A-2 148 786 (ARMITAGE SHANKS)<br>* page 2, line 18 - line 24 *<br>* page 2, line 73 - line 99 *<br>--- | 1-7 | |
| A | WORLD PATENTS INDEX<br>Section Ch, Week 10,<br>Derwent Publications Ltd., London, GB;<br>Class A, AN 79-19246B<br>& JP-A-54 013 589 (TOYODA GOSEI) 1 February 1979<br>* abstract *<br>--- | 1,5 | |
| A | GB-A-2 146 266 (AMERICAN STANDARD)<br>* page 1, line 61 - page 2, line 12 *<br>--- | 1,5 | |
| A | US-A-3 356 253 (WIMMER)<br>* column 2, line 9 - line 16 *<br>----- | 1,5 | TECHNICAL FIELDS SEARCHED (Int. Cl.5 )<br><br>B29C<br>A47K |

The present search report has been drawn up for all claims

| Place of search | Date of completion of the search | Examiner |
|---|---|---|
| THE HAGUE | 17 FEBRUARY 1992 | ATTALLA G. |

EPO FORM 1503 03.82 (P0401)